# EUROPÄISCHE PATENTSCHRIFT

(11) **EP 0 918 151 B1**
(45) Veröffentlichungstag und Bekanntmachung des Hinweises auf die Patenterteilung: **07.01.2004**
(21) Anmeldenummer: 97810879.3
(22) Anmeldetag: 19.11.1997
(51) Int. Cl.: F02C 7/224

(54) **Verfahren und Vorrichtung zur Brennstoffvorwärmung einer Feuerungsanlage**
Device and method to preheat fuel for a combustor
Dispositif et méthode pour préchauffer du carburant pour un dispositif de combustion

(43) Veröffentlichungstag der Anmeldung: 26.05.1999
(73) Patentinhaber: ALSTOM (Switzerland) Ltd, 5401 Baden (CH)
(72) Erfinder: Fischer, Kurt, 5507 Mellingen (CH); Kuske, Ralf, 79862 Höchenschwand (DE); Liebig, Erhard, Dr., 71254 Ditzingen (DE)

(56) Entgegenhaltungen:
- EP-A- 0 391 082
- DE-C- 19 512 466
- US-A- 5 267 608
- US-A- 5 357 746

## Beschreibung

### Technisches Gebiet

Die Erfindung bezieht sich auf ein Verfahren sowie eine Vorrichtung zur Brennstoffvorwärmung einer Feuerungsanlage, die mit flüssigem oder gasförmigen Brennstoff betrieben wird, der der Feuerungsanlage über eine Zuführleitung zugeführt wird, mit wenigstens einer Wärmeübertragereinheit, die mit der Zuführleitung thermisch gekoppelt ist und durch die Wärme von einem Heizmedium, das in einem Heizkreislauf geführt ist, auf den Brennstoff übertragen wird.

### Stand der Technik

Feuerungsanlagen mit einer Brennereinheit, die mittels gezielter Zufuhr und Verbrennung gasförmiger und/oder flüssiger Brennstoff der Erhitzung eines Arbeitsmediums dienen, das wiederum zur Energiegewinnung oder Arbeitsverrichtung genutzt wird, werden durch ständige Überarbeitung und konstruktive Optimierung unter dem Gesichtspunkt der Wirkungsgrad- und/oder Leistungssteigerung des Verbrennungsvorganges verbessert.

Aus der DE 43 21 081 A1 geht ein typischer Vertreter für Feuerungsanlagen hervor, nämlich eine Gasturbinenanlage, mit einer Brennkammer, in der gezielt Brennstoff zur nachfolgenden Verbrennung und Bildung von die Gasturbine antreibenden Heißgasen eingeleitet wird. Zur Steigerung des Wirkungsgrades der Gasturbine und insbesondere des Verbrennungsvorganges wird vorgeschlagen, den in die Brennkammer einzuleitenden Brennstoff auf Temperaturen zwischen 100° C bis 400° C vorzuwärmen. Hierzu ist in der Brennstoffzuleitung ein Wärmetauscher vorgesehen. In diesem Wärmetauscher gibt ein Heizmedium Wärme unmittelbar an den in der Brennstoffleitung strömenden Brennstoff ab.

Insbesondere handelt es sich bei der in der vorstehend genannten Druckschrift beschriebenen Anlage um eine kombinierte Gas-Dampfturbinenanlage, bei der die aus der Gasturbine austretenden Rauchgase über eine Abgasleitung in einen Abhitzedampferzeuger geführt werden, deren Abwärme zur Vorwärmung und Entgasung des Speisewassers sowie zur Erzeugung von Dampf in einer Niederdruckund einer Hochdruckstufe dient. Niederdruck- und Hochdruckdampf werden in einem Dampfturbosatz zur Erzeugung elektrischer Energie eingesetzt. Der Abdampf wird im Kondensator niedergeschlagen und das Kondensat erneut dem Abhitzedampferzeuger zugeführt.

Für die Vorwärmung des in der Brennstoffleitung der Gasturbine zugeführten Brennstoffes auf das vorstehend genannte gewünschte Temperaturniveau bietet es sich an, den in der Brennstoffleitung integrierten Wärmetauscher mit einer Zuleitung für das Heizmedium aus dem Speisewasserbehälter/Entgaser und einer Ableitung in die Kondensatleitung zu verschalten.

Ein wesentlicher Gesichtspunkt der in der Druckschrift genannten Brennstoffvorwärmung betrifft die Vermeidung des Eindringens gasförmiger Bestandteile des Brennstoffes in den Heizkreislauf, wodurch das Heizmedium verunreinigt werden kann. Derartige sicherheitstechnisch relevante Verunreinigungen können insbesondere durch Leckagen in den Heizflächen verursacht werden. Aus diesem Grunde muß der Druck auf der Seite des Heizmediums größer sein als der Druck des Brennstoffes. Somit kann der Eintritt von Brennstoff in den Heizkreislauf ausgeschlossen werden. Beim Auftreten etwaiger Leckagen kann lediglich ein Austritt von Heizmedium aus dem Heizkreislauf erfolgen. Zur Sicherstellung der notwendigen Druckverhältnisse ist in der Zuführleitung des Heizmediums zum Wärmetauscher eine Pumpe vorgesehen, die den Druck vor dem Wärmetauscher erhöht. Andererseits ist in der Ableitung eine entsprechende Drosseleinheit vorgesehen, die den erhöhten Druck an die Verhältnisse in der Kondensatleitung wieder anpaßt.

Nachteilig bei dieser Schaltungsvariante ist die Druckerhöhung mittels einer Pumpe mit anschließendem Druckabbau in einer Drosseleinheit.

Eine alternative Variante sieht vor, das Heizmedium dem Austritt des Hochdruckeconomizer zu entnehmen, um auf diese Weise sicherzustellen, daß der in der Zuführleitung des Heizmediums vorherrschende Druck größer ist, als der Druck dem der Brennstoff in der Brennstoffleitung ausgesetzt ist. Die Rückführung des Heizmediums erfolgt in den Speisewasserbehälter/Entgaser und setzt eine entsprechende Drosseleinrichtung voraus.

Die vorstehend beschriebene Variante der Entnahme des Heizmediums aus der Hochdruckstufe des Abhitzekessels ist aus energetischen Gründen nicht besonders vorteilhaft, da das durch Druck und Temperatur vorgegebene hohe Energieniveau des Heizmediums innerhalb der Dampfturbine zur Energiegewinnung genutzt werden sollte und nicht für eine andere Verwendung auf niedrigem Energieniveau, wie bspw. der Brennstoffvorwärmung, zur Verfügung stehen.

In der US-A-5 267 608 ist ein Wärmetauscher zum Vorwärmen von Kraftstoff in Flugzeugen beschrieben. Zur Vermeidung von unerwünschten Verunreinigungen des Heizmediums mit Kraftstoff oder umgekehrt sieht der Wärmetauscher zwei räumlich voneinander getrennte Bereiche vor, von denen einer von dem Heizmedium und der anderer von dem Kraftstoff durchströmt werden. Somit treten das Heizmedium und der Kraftstoff nicht in unmittelbaren thermischen Kontakt. Zur Wärmeübertragung sind vielmehr Querverbindungen in Form von Rohren vorgesehen, die beide Bereiche thermisch miteinander koppeln und durch die Dampf für den erforderlichen Wärmetransport geleitet wird.

In der DE-A-195 12 466 ist eine Gas- und Dampfturbinenanlage mit einem Abhitzedampferzeuger beschrieben. Diese Turbinenanlage weist ein Brennstoffvorwärmesystem auf. Das Brennstoffvorwärmesystem besitzt einen ersten Wärmetauscher zur Brennstoffvorwärmung, der mit einem zweiten Wärmetauscher über einen Zwischenkreis verbunden ist. Der zweite Wärmetauscher ist mit der Ausgangsseite eines Mitteldruck-Economisers 40 verbunden. Dieser Zwischenkreis dient dazu, im Fall einer Leckage beim Wärmetausch einen Kontakt zwischen dem aus dem Economiser herausgeführten Teilstrom und dem Brennstoff zu verhindern. Über die Druckverhältnisse des Heizmediums und des Brennstoffs im Bereich des Wärmetauschers sind keine Angaben gemacht.

In der Druckschrift EP-A-391 082 ist ein Kombikraftwerk beschrieben, bei dem eine Brennstoffvorwärmung mit einem am Ausgang eines Economisers abgezweigten Dampfstrom vorgenommen wird.

Auch in der US-A-5357746 ist ein Kombikraftwerk beschrieben, bei dem der Brennstoff über einen Wärmetauscher vorgewärmt wird. Dem Wärmetauscher wird mittels der Abgase der Verbrennungsturbine erwärmtes Heizmedium zugeführt. Gleichsam der EP-A-391 082 sind auch der US-A-5357746 keine Angaben über die Druckverhältnisse in den jeweiligen Zufühleitungen für den Brennstoff und das Heizmedium im Bereich des Wärmetauschers entnehmbar.

### Darstellung der Erfindung

Der Erfindung liegt die Aufgabe zugrunde, ein Verfahren sowie eine Vorrichtung zur Brennstoffvorwärmung einer Feuerungsanlage, die mit flüssigem oder gasförmigem Brennstoff betrieben wird, der der Feuerungsanlage über eine Zuführleitung zugeführt wird, mit wenigstens einer Wärmeübertragereinheit, durch die Wärme von einem Heizmedium, das in einem Heizkreislauf geführt ist, unmittelbar auf den Brennstoff übertragen wird, derart anzugeben, daß bei möglichst geringem konstruktiven und technischen Aufwand sowie unter Beibehaltung der bisher erreichten Betriebssicherheit eine gezielte Brennstoffvorwärmung zur Wirkungsgrad- und Leistungssteigerung der Feuerungsanlage möglich ist. Die zu treffenden Maßnahmen sollen insbesondere dazu dienen anlagenspezifische Wärme auf möglichst niedrigem Druck- und Temperaturniveau zur Brennstoffvorwärmung zu nutzen.

Die Lösung der der Erfindung zugrundeliegenden Aufgabe ist im Anspruch 1 angegeben, der ein erfindungsgemäßes Verfahren beschreibt. Anspruch 7 stellt auf eine erfindungsgemäße Anordnung ab. Den Erfindungsgedanken weiterbildende Merkmale sind Gegenstand der Unteransprüche.

Der Erfindung liegt die Idee zugrunde, zur Brennstoffvorwärmung für den Betrieb einer Feuerungsanlage eine Wärmeübertragereinheit in der Zuführleitung für den Brennstoff vorzusehen, innerhalb dem das Heizmittel einem Druck ausgesetzt ist, der kleiner ist als der Druck, mit dem der Brennstoff durch die Zuführleitung in die Feuerungsanlage geleitet wird.

Die erfindungsgemäße Druckeinstellung bricht mit der bisher bekannten Vorstellung zur Vermeidung des Einströmens von Brennstoff in den Heizkreislauf durch mögliche Leckagen, die in der Wärmeübertragereinheit auftreten können. Zwar besteht nunmehr mit der erfindungsgemäßen Druckeinstellung die Möglichkeit, daß Brennstoff in den Heizkreislauf im Schadensfall eintreten könnte, doch können derartige Brennstoffkontaminationen im Heizmedium durch der Wärmeübertragereinheit nachgeschaltete Separatoren bzw. Abscheideeinheiten vollständig wieder beseitigt werden.

Durch die Möglichkeit, daß der Druck des Heizmediums kleiner sein kann als der Druck des Brennstoffes, bedarf es keinem Heißwasser hohen Drucks, an die der Heizkreislauf thermisch gekoppelt ist.

Im Falle der vorstehend beschriebenen Gas- und Dampfturbinenanlage bedeutet dies, daß der durch die Wärmeübertragereinheit laufende Heizkreislauf mit dem Niederdrucksystem des Abhitzekessels gekoppelt ist. Eine entsprechende Teilstromabzweigung nach dem Niederdruckeconomizer in den Heizkreislauf führt aufgrund des verhältnismäßig niedrigen Temperatur- und Druckniveaus nur zu einer unwesentlichen Minderleistung Dampfturbine. Bei gleicher Brennstoffvorwärmung ist der Beitrag der Steigerung des Wirkungsgrades der Feuerungsanlage gleich.

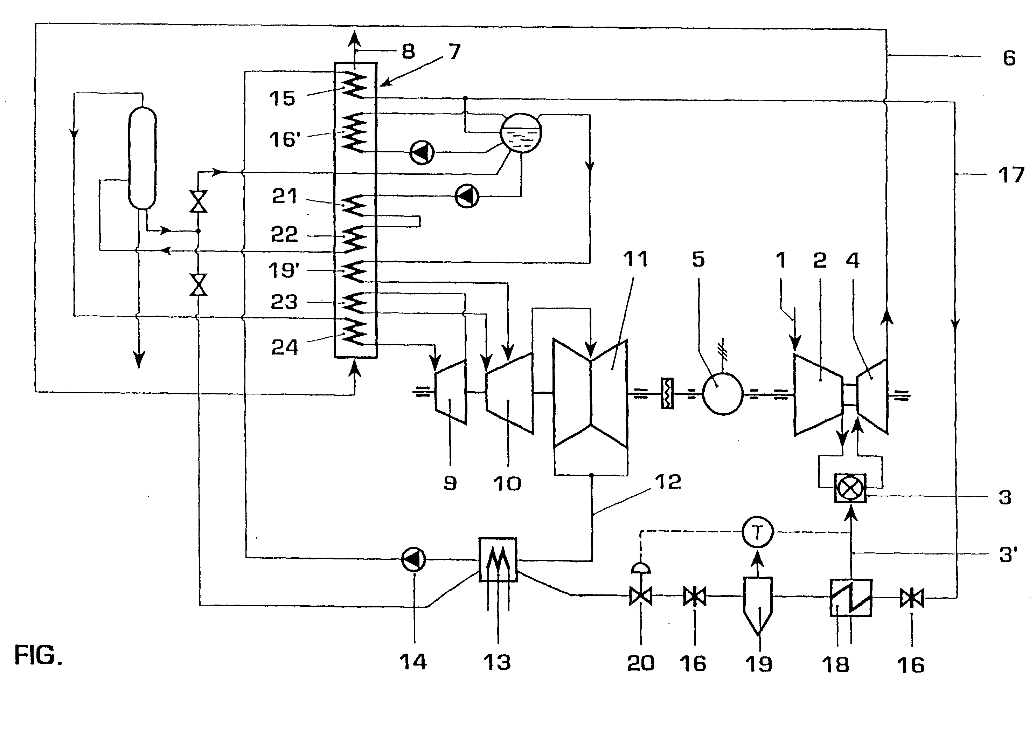

Als besonders vorteilhaft erweist sich die erfindungsgemäße Druckeinstellung darin, daß Heißwasser auf einem relativ niedrigem Druckniveau verwendbar ist, wodurch keine zusätzlichen Pumpen zur Druckerhöhung im Heizkreislauf bzw. Drosselelemente zur entsprechenden Druckabsenkung erforderlich sind, wie es beispielsweise in der vorstehend genannten Druckschrift DE 43 21 081 beispielsweise im Ausführungsbeispiel gemäß Fig. 1 der Fall ist.

Bevorzugt wird gasförmiger Brennstoff der Feuerungsanlage zugeführt, so daß aufgrund der geforderten Druckverhältnisse das im Heizkreislauf geführte Heizmedium mit gasförmigem Brennstoff kontaminiert werden kann, sofern Leckagen vorliegen. Derartige Kontaminationen können jedoch mit Hilfe geeigneter Gasabscheider vollständig beseitigt werden, so daß der Betrieb der vorgeschlagenen Brennstoffvorwärmung allen vorhandenen Sicherheitsaspekten entspricht. Umgekehrt kann davon ausgegangen werden, daß aufgrund der eingestellten Druckverhältnisse eine Kontamination des Brennstoffes mit dem Heizmedium ausgeschlossen werden kann.

### Kurze Beschreibung der Erfindung

Die Erfindung wird nachstehend ohne Beschränkung des allgemeinen Erfindungsgedankens anhand eines Ausführungsbeispieles unter Bezugnahme auf die einzige Zeichnung exemplarisch beschrieben.

### Wege zur Ausführung der Erfindung, gewerbliche Verwendbarkeit

In der einzigen Figur ist eine kombinierte Gas- und Dampfturbinenanlage dargestellt, wie sie dem Grundaufbau entsprechend aus der deutschen Offenlegungsschrift DE 195 44 226 A1 hervorgeht. Im folgenden werden jeweils die für den Erfindungsgedanken relevanten Schaltungsbestandteile beschrieben. Alle übrigen, nicht mit Bezugsziffern versehenen Komponenten können aus der vorstehend genannten Offenlegungsschrift entnommen werden.

Gemäss der einzigen Figur wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine 4 angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert.

Die Abhitzedampferzeugungsanlage 7 arbeitet im vorliegenden Fall nach einem Zweidruck-Dampfprozess.

Das Niederdrucksystem ist als Umlaufsystem mit Trommel ausgeführt, wobei hier ein Zwangsumlaufsystem gewählt worden ist. Es besteht im Rauchgasweg des Kessels aus einem Niederdruckeconomizer 15, in den das Kondensat eingeleitet wird, einem Niederdruckverdampfer 16' und einem Niederdrucküberhitzer 19'. Der Niederdruckverdampfer 16' ist über eine Umwälzpumpe mit einer Trommel verbunden. Der überhitzte Dampf wird über eine Niederdruck-Dampfleitung in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomizer 21, dem Hochdruckverdampfer 22 und dem Hochdrucküberhitzer 23. Dem Hochdruckeconomizer 21 wird das Arbeitsmittel über eine Hochdruckspeisepumpe aus der Niederdrucktrommel zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt. Nach der Teilentspannung im Hochdruckteil 9 der Turbine wird der Dampf vor der Überleitung in die Mitteldruckturbine 10 zwischenüberhitzt.

Erfindungsgemäß ist eine Abführleitung 17 vom Niederdruckeconomizer 15 vorgesehen, über die das Heizmedium, das typischerweise einem Druck zwischen ca. 8 und 10 bar ausgesetzt ist, bei Temperaturen in der Größenordnung von maximal 200°C und insbesondere von 160 bis 170°C einer Wärmeübertragereinheit 18 zugeführt wird, die zur Brennstoffvorwärmung in der Zuführleitung 3' angebracht ist. Dabei erfolgt eine Brennstofferwärmung auf maximal 180°C, insbesondere auf 120 bis 150°C. In Strömungsrichtung des Heizmediums vor der Wärmeübertragereinheit 18 und nach der Abscheideeinrichtung 19 sind Absperrventile 16 vorgesehen, welche sich wasserseitig absperren lassen. Über ein Regelventil 20 läßt sich über den Durchfluß des Heizmediums die gewünschte Brennstofftemperatur einstellen.

Anstelle des Einsatzes von gasförmigen Brennstoff, der innerhalb der Brennkammer verbrannt und in der beschriebenen Weise vorgewärmt wird, kann auch flüssiger Brennstoff, bspw. Öl, verwendet werden. Zur Vermeidung einer bleibenden Kontamination des Heizmediums mit Öl durch mögliche Leckagen ist ein entsprechender Ölabscheider anstelle des vorstehend beschriebenen Gasabscheider vorzusehen.

Alternativ zu der im Ausführungsbeispiel gezeigten Wärmequelle 7, die als Abhitzedampferzeugungsanlage 7 zum Betrieb einer Dampfturbine dient, können zur Brennstoffvorwärmung auch anders geartete Wärmequellen verwendet und eingesetzt werden, so z.B. chemische Reaktoren, in denen exotherme Reaktionen ablaufen, wie sie in der chemischen Industrie in großer Vielfalt vorkommen.

### Bezugszeichenliste

- 1: Zuführleitung für angesaugte Frischluft
- 2: Verdichterstufe
- 3: Brennkammer
- 3': Zuführleitung
- 4: Gasturbine
- 5: Generator
- 6: Abgasleitung
- 7: Abhitzedampferzeugungsanlage, Abwärmequelle
- 8: Leitung zum Kamin
- 9: Hochdruckturbine
- 10: Mitteldruckturbine
- 11: Niederdruckturbine
- 12: Abführleitung
- 13: Kondensator
- 14: Kondensatpumpe
- 15: Niederdruckeconomizer
- 16: Absperrventil
- 16': Niederdruckverdampfer
- 17: Abführleitung, Heizkreislauf für Heizmedium
- 18: Wärmeübertragereinheit
- 19: Separator bzw. Abscheideeinrichtung
- 19': Niederdrucküberhitzer
- 20: Regelventil für Brennstoffvorwärmung
- 21: Hochdruckeconomizer
- 22: Hochdruckverdampfer
- 23: Hochdrucküberhitzer
- 24: Frischdampfleitung

## Patentansprüche

1. Verfahren zur Brennstoffvorwärmung einer Feuerungsanlage, die mit flüssigem oder gasförmigen Brennstoff betrieben wird, der der Feuerungsanlage über eine Zuführleitung (3') zugeführt wird, mit wenigstens einer Wärmeübertragereinheit (18), durch die Wärme von einem Heizmedium, das in einem Heizkreislauf (17) geführt ist unmittelbar auf den Brennstoff übertragen wird, **dadurch gekennzeichnet, daß** im Bereich des Wärmetauschers (18) der Druck, mit dem der Brennstoff in der Zuführleitung (3') geführt wird größer ist als der Druck, mit dem das Heizmedium im Heizkreislauf (17) geführt wird, und dass der Wärmeübertragereinheit (18) innerhalb des Heizkreislaufes eine Abscheidevorrichtung (19) nachgeschaltet ist, durch die über Leckagen in den Heizkreislauf gelangter Brennstoff aus diesem wieder ausgeschieden wird.

2. Verfahren nach Anspruch 1, **dadurch gekennzeichnet, daß** der Heizkreislauf thermisch an einen gasbeheizten Abhitzekessel (7) gekoppelt ist, durch den das Heizmedium bei Temperaturen bis maximal 200°C, insbesondere 160 - 170 °C, und einem Druck bis maximal 20 bar, insbesondere 8 bis 10 bar, zur Verfügung steht.

3. Verfahren nach Anspruch 2, **dadurch gekennzeichnet, daß** der Abhitzekessel eine Niederdruckstufe aufweist an die der Heizkreislauf thermisch angekoppelt wird.

4. Verfahren nach einem der Ansprüche 1 bis 3, **dadurch gekennzeichnet, daß** der Druck in der Brennstoffleitung bis zu 50 bar beträgt.

5. Verfahren nach einem der Ansprüche 1 bis 4, **dadurch gekennzeichnet, daß** eine Brennstofferwärmung auf maximal 180°C, insbesondere 120 bis 150°C, erfolgt.

6. Verfahren nach einem der Ansprüche 1 bis 5, **dadurch gekennzeichnet, daß** die Erwärmung des Brennstoffes mittels eines temperaturgesteuerten Regelventils (20) eingestellt wird.

7. Anordnung zur Brennstoffvorwärmung einer Feuerungsanlage, die mit flüssigem oder gasförmigen Brennstoff betreibbar ist, der der Feuerungsanlage über eine Zuführleitung (3') zugeführt wird, mit wenigstens einer Wärmeübertragereinheit (18), durch die Wärme von einem Heizmedium, das in einem Heizkreislauf (17) geführt ist unmittelbar auf den Brennstoff übertragen wird, **dadurch gekennzeichnet, daß** der Heizkreislauf thermisch an eine Abwärmequelle (7) gekoppelt ist, durch die das Heizmedium erwärmbar ist, daß der Brennstoff in der Zuführleitung (3') derart druckbeaufschlagt der Wärmeübertragereinheit (18) zuführbar ist, daß der Druck im Bereich der Wärmeübertragereinheit (18) innerhab der Zuführleitung (3') größer als der Druck im Heizkreislauf ist, und
dass der Wärmeübertragereinheit (18) im Heizkreislauf eine Abscheidevorrichtung (19) nachgeschaltet ist, die durch Leckagen in den Heizkreislauf gelangten Brennstoff aus diesem wieder entfernt.

8. Anordnung nach Anspruch 7, **dadurch gekennzeichnet, daß** die Feuerungsanlage eine Brennkammer einer Gasturbine ist.

9. Anordnung nach Anspruch 7 oder 8, **dadurch gekennzeichnet, daß** die Abwärmequelle (7) ein Abhitzekessel ist.

10. Anordnung nach Anspruch 9, **dadurch gekennzeichnet, daß** der Abhitzekessel (7) einen Niederdruckvorwärmer bzw. Niederdruckeconomizer (15) vorsieht, an den der Heizkreislauf angeschlossen ist.

11. Anordnung nach Anspruch 10, **dadurch gekennzeichnet, daß** im Heizkreislauf in Strömungsrichtung vor der Wärmeübertragereinheit und nach der Abscheideeinrichtung wenigstens ein Absperrventil (16) vorgesehen ist.

12. Anordnung nach Anspruch 7 oder 8, **dadurch gekennzeichnet, daß** die Abwärmequelle eine befeuerte Einheit oder ein Reaktionsbereich ist, in dem exotherme chemische Reaktionen ablaufen.

13. Anordnung nach einem der Ansprüche 7 bis 12, **dadurch gekennzeichnet, daß** ein Regelventil (20) vorgesehen ist, das in Abhängigkeit eines Temperaturfühlers den Durchfluß durch die Heizmittelleitung und damit die Erwärmung des Brennstoffes regelt.

## Claims

1. Method for preheating the fuel for a firing plant which is operated with liquid or gaseous fuel, which is fed to the firing plant via a feed line (3'), having at least one heat-exchanger unit (18) through which heat is transferred from a heating medium, which is directed in a heating circuit (17), directly to the fuel, **characterized in that**, in the region of the heat exchanger (18), the pressure at which the fuel is directed in the feed line (3') is greater than the pressure at which the heating medium is directed in the heating circuit (17), and **in that** a separating device (19) is connected downstream of the heat-exchanger unit (18) inside the heating circuit, by means of which separating device (19) fuel which has passed into the heating circuit due to leakages is removed from the heating circuit again.

2. Method according to Claim 1, **characterized in that** the heating circuit is thermally coupled to a gas-heated heat-recovery boiler (7), by means of which the heating medium is available at temperatures of up to at most 200°C, in particular 160 - 170°C, and a pressure of up to at most 20 bar, in particular 8 to 10 bar.

3. Method according to Claim 2, **characterized in that** the heat-recovery boiler has a low-pressure stage, to which the heating circuit is thermally coupled.

4. Method according to one of Claims 1 to 3, **characterized in that** the pressure in the fuel line is up to 50 bar.

5. Method according to one of Claims 1 to 4, **characterized in that** heating of the fuel is effected to at most 180°C, in particular 120 to 150°C.

6. Method according to one of Claims 1 to 5, **characterized in that** the heating of the fuel is set by means of a temperature-controlled regulating valve (20).

7. Arrangement for preheating the fuel for a firing plant which can be operated with liquid or gaseous fuel, which is fed to the firing plant via a feed line (3'), having at least one heat-exchanger unit (18) through which heat is transferred from a heating medium, which is directed in a heating circuit (17), directly to the fuel, **characterized in that** the heating circuit is thermally coupled to a waste-heat source (7), by means of which the heating medium can be heated, **in that** the fuel in the feed line (3') can be fed in a pressurized state to the heat-exchanger unit (18) in such a way that the pressure in the region of the heat-exchanger unit (18) inside the feed line (3') is greater than the pressure in the heating circuit, and **in that** a separating device (19) is connected downstream of the heat-exchanger unit (18) in the heating circuit, by means of which separating device (19) fuel which has passed into the heating circuit due to leakages is removed from the heating circuit again.

8. Arrangement according to Claim 7, **characterized in that** the firing plant is a combustion chamber of a gas turbine.

9. Arrangement according to Claim 7 or 8, **characterized in that** the waste-heat source (7) is a heat-recovery boiler.

10. Arrangement according to Claim 9, **characterized in that** the heat-recovery boiler (7) provides a low-pressure preheater or low-pressure economizer (15), to which the heating circuit is connected.

11. Arrangement according to Claim 10, **characterized in that** at least one shut-off valve (16) is provided in the heating circuit in the direction of flow upstream of the heat-exchanger unit and downstream of the separating device.

12. Arrangement according to Claim 7 or 8, **characterized in that** the waste-heat source is a fired unit or a reaction region in which exothermic chemical reactions take place.

13. Arrangement according to one of Claims 7 to 12, **characterized in that** a regulating valve (20) is provided which, as a function of a temperature sensor, regulates the flow through the heating-medium line and thus the heating of the fuel.

## Revendications

1. Procédé de préchauffage de carburant d'une installation de combustion, qui fonctionne avec du combustible liquide ou gazeux, qui est acheminé à l'installation de combustion par le biais d'une conduite d'alimentation (3'), comprenant au moins une unité de transfert thermique (18), grâce à laquelle de la chaleur provenant d'un fluide chaud conduit dans un circuit chaud (17) est directement transmise au combustible, **caractérisé en ce que** dans la région de l'échangeur de chaleur (18) la pression avec laquelle le combustible est conduit dans la conduite d'alimentation (3') est supérieure à la pression avec laquelle le fluide chaud est conduit dans le circuit chaud (17), et **en ce,qu'**un dispositif séparateur (19) est monté à l'intérieur du circuit chaud après l'unité de transfert thermique (18), lequel permet d'éliminer le combustible étant parvenu par l'intermédiaire de fuites dans le circuit chaud à nouveau hors de celui-ci.

2. Procédé selon la revendication 1, **caractérisé en ce que** le circuit chaud est couplé thermiquement à une chaudière à chaleur perdue (7) chauffée au gaz, grâce à laquelle le fluide chaud est disponible à des températures allant au maximum jusqu'à 200°C, en particulier de 160-170°C, et à une pression allant au maximum jusqu'à 20 bars, en particulier de 8 à 10 bars.

3. Procédé selon la revendication 2, **caractérisé en ce que** la chaudière à chaleur perdue présente un étage basse pression auquel est couplé thermiquement le circuit chaud.

4. Procédé selon l'une quelconque des revendications 1 à 3, **caractérisé en ce que** la pression dans la conduite de combustible peut aller jusqu'à 50 bars.

5. Procédé selon l'une quelconque des revendications 1 à 4, **caractérisé en ce qu'**il se produit un réchauffement du combustible jusqu'à 180°C maximum, notamment jusqu'à 120 à 150°C.

6. Procédé selon l'une quelconque des revendications 1 à 5, **caractérisé en ce que** le réchauffement du combustible est ajusté au moyen d'une soupape de régulation (20) commandée en température.

7. Agencement pour le préchauffage du combustible d'une installation de combustion qui fonctionne avec du combustible liquide ou gazeux, qui est acheminé à l'installation de combustion par le biais d'une conduite d'alimentation (3'), comprenant au moins une unité de transfert thermique (18) , grâce à laquelle de la chaleur provenant d'un fluide chaud conduit dans un circuit chaud (17) est directement transmise au combustible, **caractérisé en ce que** le circuit chaud est couplé thermiquement à une source de chaleur perdue (7), grâce à laquelle le fluide chaud peut être réchauffé, **en ce que** le combustible dans la conduite d'alimentation (3') peut être acheminé sous pression à l'unité de transfert thermique (18) de telle sorte que la pression dans la région de l'unité de transfert thermique (18) à l'intérieur de la conduite d'alimentation (3') soit supérieure à la pression dans le circuit chaud, et
**en ce qu'**un dispositif séparateur (19) est monté à l'intérieur du circuit chaud après l'unité de transfert thermique (18), lequel permet d'éliminer le combustible étant parvenu par l'intermédiaire de fuites dans le circuit chaud à nouveau hors de celui-ci.

8. Agencement selon la revendication 7, **caractérisé en ce que** l'installation de combustion est une chambre de combustion d'une turbine à gaz.

9. Agencement selon la revendication 7 ou 8, **caractérisé en ce que** la source de chaleur perdue (7) est une chaudière à chaleur perdue.

10. Agencement selon la revendication 9, **caractérisé en ce que** la chaudière à chaleur perdue (7) prévoit un préchauffeur à basse pression ou un économiseur à basse pression (15) auquel est raccordé le circuit chaud.

11. Agencement selon la revendication 10, **caractérisé en ce que** l'on prévoit au moins une soupape d'arrêt (16) dans le circuit chaud dans la direction de l'écoulement avant l'unité de transfert thermique et après le dispositif séparateur.

12. Agencement selon la revendication 7 ou 8, **caractérisé en ce que** la source de chaleur perdue est une unité chauffée ou une zone de réaction dans laquelle se déroulent des réaction chimiques exothermiques.

13. Agencement selon l'une quelconque des revendications 7 à 12, **caractérisé en ce que** l'on prévoit une soupape de régulation (20) qui régule le débit par le biais de la conduite de fluide chaud et donc le réchauffement du combustible en fonction d'un capteur de température.
